(19) Europäisches Patentamt
European Patent Office
Office européen des brevets

(11) **EP 4 345 696 A1**

(12) **EUROPEAN PATENT APPLICATION**

(43) Date of publication:
03.04.2024 Bulletin 2024/14

(21) Application number: 23194811.8

(22) Date of filing: 01.09.2023

(51) International Patent Classification (IPC):
**G06N 5/01** (2023.01)    **G06F 17/11** (2006.01)
**G06N 7/01** (2023.01)

(52) Cooperative Patent Classification (CPC):
**G06N 5/01; G06F 17/11; G06N 7/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 28.09.2022 JP 2022155524

(71) Applicants:
• **FUJITSU LIMITED**
  **Kawasaki-shi, Kanagawa 211-8588 (JP)**
• **The Governing Council of the University of Toronto**
  **Toronto, Ontario M5G 1L5 (CA)**

(72) Inventors:
• **CHEN, Sigeng**
  **Toronto, Ontario, M5S 1A1 (CA)**
• **ROSENTHAL, Jeffrey Seth**
  **Toronto, Ontario, M5S 1A1 (CA)**
• **SHEIKHOLESLAMI, Ali**
  **Toronto, Ontario, M5S 1A1 (CA)**
• **TAMURA, Hirotaka**
  **Yokohama-shi, Kanagawa, 223-0066 (JP)**
• **DOTE, Aki**
  **Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **DATA PROCESSING APPARATUS, PROGRAM, AND DATA PROCESSING METHOD**

(57)    A storing unit stores, amongst coefficients, values of a coefficient group associated with one selected from multiple variable groups, which are obtained by dividing state variables of an evaluation function. A searching unit searches for a solution to an optimization problem by repeating update processing, which includes calculating, using the values of the coefficient group, a value change of the evaluation function responsive to changing the value of each state variable of the variable group and changing the value of one state variable thereof based on the value change and temperature. A processing unit calculates multiplicity indicating the iteration count in which the values of the variable group are maintained in a search using Markov chain Monte Carlo (MCMC), and causes, responsive to cumulated multiplicity exceeding a threshold, the searching unit to perform the update processing using the values of the coefficient group associated with a different variable group.

FIG. 1

EP 4 345 696 A1

**Description**

FIELD

The embodiment discussed herein relates to a data processing apparatus, program, and data processing method.

BACKGROUND

There is a method of transforming a combinatorial optimization problem into an Ising model, which represents the behavior of magnetic spins, in searching for a solution to the combinatorial optimization problem. Then, using a Markov chain Monte Carlo method, a search is made for states of the Ising model, in each of which the value of an evaluation function of the Ising model (corresponding to the energy of the Ising model) has a local minimum. A state with the minimum value amongst the local minima of the evaluation function is the optimal solution to the combinatorial optimization problem. Note that, by changing the sign of the evaluation function, it is also possible to search for states where the value of the evaluation function has a local maximum.

The Markov chain Monte Carlo method is hereinafter abbreviated as MCMC method. In addition, processing by the MCMC method may be referred to as MCMC processing. In the MCMC processing, a state transition is accepted with an acceptance probability of the state transition defined, for example, by a Metropolis or Gibbs method. Simulated annealing and replica exchange are optimization or sampling methods which can be used with MCMC methods.

No state transition takes place if a state transition continues to be rejected in each iteration of the MCMC processing. In order to prevent this phenomenon, some methods have been proposed to generate a sample sequence where state transitions occur for every iteration (see, for example, Japanese Laid-open Patent Publication No. 2020-135727; and J. S. Rosenthal et al., "Jump Markov Chains and Rejection-Free Metropolis Algorithms", Computational Statistics, 36(4), pp. 2789-2811, 2021). Such techniques are also called Rejection-Free.

The number of coefficients defining a problem (weight coefficients between individual state variables) increases with an increase in the scale of the problem. Note that the scale of the problem is represented by the number of state variables, which corresponds to the number of spins of the Ising model. As a result, data processing apparatuses for calculating combinatorial optimization problems may face the issue of not being able to store all the weight coefficients in fast but relatively small capacity memory (e.g., an on-chip memory). In such a case, the weight coefficients are held in memory with relatively large capacity; however, access to the weight coefficients may take long, thus greatly limiting the processing speed.

Conventionally, there are proposed methods of dividing a combinatorial optimization problem into multiple sub-problems to reduce the size of the weight coefficients so that the weight coefficients may be stored in memory, and then searching for a solution by Rejection-Free for each sub-problem (see, for example, Sigeng Chen et al., "Optimization via Rejection-Free Partial Neighbor Search", arXiv:2205.02083, April 15, 2022). The sub-problem calculation searches for a solution by dividing all state variables into multiple state variable groups and generating a state transition to a neighbor state (for example, a state with a Hamming distance of 1 bit) within the range of each state variable group. For this reason, the sub-problem calculation is also referred to as partial neighbor search.

In the case of performing a partial neighbor search by Rejection-Free, however, bias may occur in the solution search range for each partial neighbor (i.e., each divided state variable group). In this case, an efficient solution search may fail.

SUMMARY

One aspect of the embodiment is to provide a data processing apparatus, program, and data processing method that enable an efficient solution search.

According to an aspect, there is provided a data processing apparatus including: first memory means for storing values of a plurality of weight coefficients included in an evaluation function which is obtained by transforming a combinatorial optimization problem; second memory means for storing, amongst the plurality of weight coefficients, values of a weight coefficient group which is associated with a state variable group selected from a plurality of state variable groups, the plurality of state variable groups being obtained by dividing a plurality of state variables included in the evaluation function; searching means for searching for a solution to the combinatorial optimization problem by repeating an update process, the update process including a process of calculating, using the values of the weight coefficient group read from the second memory means, a change in a value of the evaluation function responsive to changing a value of each of state variables of the state variable group and a process of changing a value of one of the state variables of the state variable group based on the change and a temperature value; and processing means for calculating, based on the change and the temperature value, multiplicity indicating a number of iterations in which the values of the state variables of the state variable group are maintained in searching for the solution using a Markov chain Monte Carlo method, and causing, responsive to a cumulated value of the multiplicity exceeding a predetermined threshold, the searching means to perform the update process using the values of the weight coefficient group which is associated with a different state variable group selected from the plurality of state variable groups.

BRIEF DESCRIPTION OF DRAWINGS

FIG. 1 illustrates an example of a data processor according to a present embodiment;
FIG. 2 is a flowchart illustrating a general flow of a data processing method;
FIG. 3 is a flowchart illustrating an example of procedures for a partial neighbor solution search and sampling;
FIG. 4 illustrates an example of a circuit for selecting a state variable whose value is to be changed by Rejection-Free;
FIG. 5 illustrates an update of energy;
FIG. 6 illustrates an example of a processing unit;
FIG. 7 illustrates an example of an escape probability calculation circuit;
FIG. 8 illustrates an example of how to switch a partial neighbor;
FIG. 9 is a flowchart illustrating an example of procedures for a partial neighbor solution search where continuous variables are used; and
FIG. 10 illustrates a hardware example of the data processor.

DESCRIPTION OF EMBODIMENTS

An embodiment will be described below with reference to the accompanying drawings.

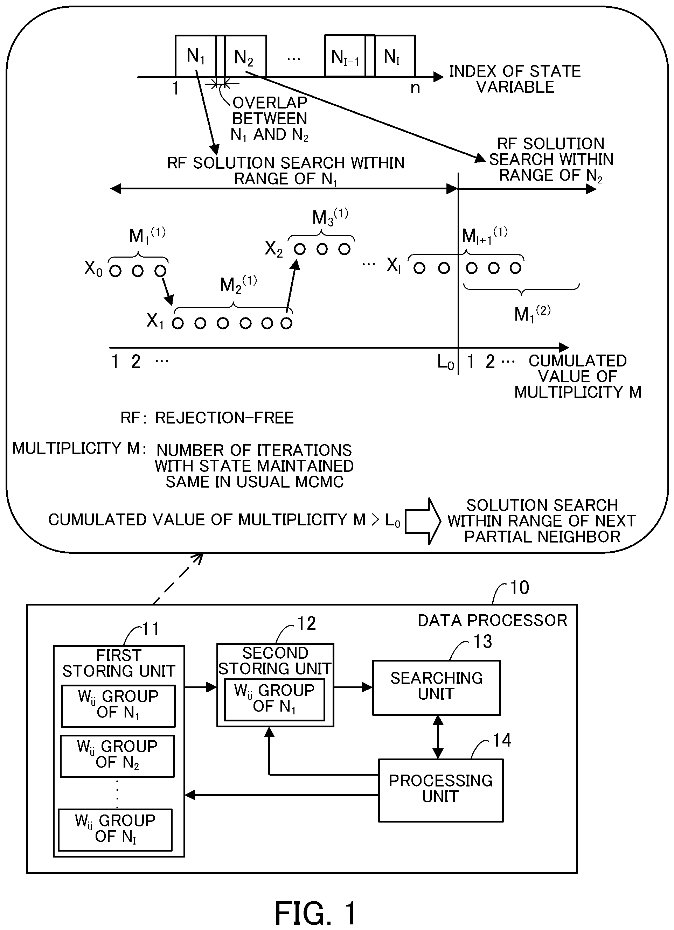

FIG. 1 illustrates an example of a data processor according to the present embodiment.
A data processor 10 searches for a solution to a combinatorial optimization problem by Rejection-Free using, for example, simulated annealing or replica exchange and outputs the found solution.
The combinatorial optimization problem is transformed, for example, into an Ising-type evaluation function. The evaluation function is also called objective function or energy function. The evaluation function includes multiple state variables and multiple weight coefficients. In the Ising-type evaluation function, the state variables are binary variables whose only possible values are 0 and 1. Each state variable may be represented using a bit. Solutions to the combinatorial optimization problem are represented by the values of the multiple state variables. A solution that minimizes the value of the evaluation function corresponds to the optimal solution of the combinatorial optimization problem. Hereinafter, the value of the evaluation value is referred to as energy.
The Ising-type evaluation function is given by the following equation (1).

$$E(x) = - \sum_{<i,j>} W_{ij} x_i x_j - \sum_i b_i x_i \qquad (1)$$

A state vector x has multiple state variables as elements and represents a state of an Ising model. Equation (1) is an evaluation function formulated in quadratic unconstrained binary optimization (QUBO) format. In the case of a problem of maximizing the energy, the sign of the evaluation function is reversed.
The first term on the right side of equation (1) is a summation of the products of the values of two state variables and their weight coefficient for all mutually exclusive and collectively exhaustive combinations of two state variables selectable from all state variables. Subscripts i and j are indices of the state variables. $x_i$ denotes the i-th state variable and $x_j$ denotes the j-th state variable. Assume in the following that the number of state variables is n. $W_{ij}$ is the weight between the i-th state variable and the j-th state variable, or the weight coefficient indicating the strength of the connection between them. Note that $W_{ij} = W_{ji}$ and $W_{ii} = 0$. When the number of state variables is n, the number of $W_{ij}$ is n × n.
The second term on the right side of equation (1) is a summation of the products of the bias of each of all the state variables and the value of the state variable. $b_i$ denotes the bias of the i-th state variable.
When the value of the state variable $x_i$ changes to $1 - x_i$, called "flip", the amount of change in the state variable $x_i$ is expressed as: $\Delta x_i = (1 - x_i) - x_i = 1 - 2x_i$. Therefore, for the evaluation function E(x), the amount of change in energy ($\Delta E_i$) associated with the change in the state variable $x_i$ is given by the following equation (2).

$$\Delta E_i = E(x)|_{x_i \to 1 - x_i} - E(x) = -\Delta x_i \left( \sum_j W_{ij} x_j + b_i \right) = -\Delta x_i h_i \quad (2)$$

$h_i$ is referred to as local field (LF). The amount of change in $h_i$ responsive to a change in the value of $x_j$ is expressed as: $\Delta h_i^{(j)} = W_{ij} \Delta x_j$.

In the solution search, a Metropolis or Gibbs method is used to determine whether to accept a state transition with an energy change of $\Delta E_i$, that is, a change of the value of the state variable $x_i$. Specifically, in a neighbor search that searches for a transition from a current state to a different state with an energy lower than that of the current state, not only a transition to a state with lower energy but also a transition to a state with higher energy is stochastically accepted. For example, an acceptance probability $A_i$ of accepting a change in the value of the state variable that causes $\Delta E_i$, is defined by equation (3) below.

$$A_i = \begin{cases} \min[1, \exp(-\beta \Delta E_i] & \text{METROPOLIS METHOD} \\ 1/[1 + \exp(\beta \Delta E_i)] & \text{GIBBS METHOD} \end{cases} \quad (3)$$

$\beta$ is the reciprocal ($\beta = 1/T$) of T (T > 0), which is a parameter representing temperature, and is called inverse temperature. $\beta$ and T are also referred to as temperature values hereinafter. The min operator returns the minimum value of its arguments. The upper part and lower part on the right side of equation (3) correspond to the Metropolis method and the Gibbs method, respectively.

However, in order to search all the neighbors, $n \times n$ $W_{ij}$'s are used for the calculation of $\Delta E_1$ to $\Delta E_n$. As the problem size increases, there may be a case where all the $W_{ij}$'s are not storable in fast but relatively small-capacity memory (e.g., on-chip memory). In this case, the $W_{ij}$'s are stored in memory with relatively large capacity (e.g., dynamic random-access memory (DRAM)). However, the access time of a DRAM is, for example, about two orders of magnitude greater than that of an on-chip random access memory (RAM), which therefore greatly limits the processing speed.

In view of this problem, the data processor 10 of the present embodiment performs neighbor searches using multiple state variable groups obtained by dividing the n state variables. Each of the multiple state variable groups is hereinafter referred to as a partial neighbor.

The data processor 10 includes a first storing unit 11, a second storing unit 12, a searching unit 13, and a processing unit 14.

The first storing unit 11 stores therein the values of multiple weight coefficients included in an evaluation function, which is obtained by transforming a combinatorial optimization problem. In the example of FIG. 1, the first storing unit 11 stores multiple weight coefficients divided into weight coefficient groups, each of which is associated with one of the multiple partial neighbors.

The first storing unit 11 is, for example, a storage device which is slower but has a larger capacity than the second storing unit 12 to be described later. Examples of such a storage device include a volatile electronic circuit, such as a DRAM, and a non-volatile electronic circuit, such as a hard disk drive (HDD) and flash memory.

The multiple partial neighbors are generated in such a manner that the weight coefficient group associated with each partial neighbor may be stored in the second storing unit 12. The multiple partial neighbors may be generated by the processing unit 14 of the data processor 10 based on problem information (including indices of the n state variables and the $n \times n$ $W_{ij}$'s) stored in the first storing unit 11 or a different storage device. Alternatively, a device external to the data processor 10 may generate the multiple partial neighbors.

The multiple partial neighbors are generated to satisfy, for example, the following constraints: (1) each partial neighbor represents a part (subset) of state space represented by the values of $x_i$ to $x_n$; (2) each partial neighbor is part of the whole neighbor; (3) if state Y is a partial neighbor of state X, then state X is also a partial neighbor of state Y; and (4) the probability of transition within a partial neighbor is proportional to that within the whole neighbor, and the probability of transition out of the partial neighbor is zero. The transition probability is given by the product of a proposal probability and the acceptance probability $A_i$ of equation (3). The proposal probability is denoted by Q(X, Y) when the state transitions from state X to state Y. Assume in an example of the present embodiment that the number of elements in a partial neighbor is m, and state transitions within the partial neighbor take place uniformly and randomly. In this case, the proposal probability is defined as: Q(X, Y) = 1/m.

Note that the constraint (3) could read that state X is a partial neighbor of state Y even if state Y is obtained from state X via multiple state transitions to partial neighbors.

To satisfy the above constraints, multiple partial neighbors are generated, for example, by simply dividing $x_1$ to $x_n$ in order of indices. The multiple partial neighbors may also be generated by randomly selecting the indices and dividing $x_1$ to $x_n$ such that each partial neighbor contains approximately the same number of state variables. Here, duplicate indices may be included in each partial neighbor. It is, however, preferable that each index be included in at least one partial neighbor. Note that, after a solution search is performed for each of the multiple partial neighbors, or after a solution search for each partial neighbor is repeated several times, indices may be randomly selected again so as to generate multiple partial neighbors and perform solution searches.

However, the method of generating multiple partial neighbors is not limited to the method described above. For example, all combinations of two indices i and j, i.e., (1, 2), ..., (1, n), (2, 3), (2, 4), ..., (2, n), ..., and (n-1, n) may be set as a whole neighbor, which is then divided into multiple partial neighbors.

FIG. 1 depicts an example where n state variables are divided into I partial neighbors ($N_2$ to $N_1$). Taking a neighbor of one bit flipping as an example, each of $N_1$ to $N_I$ is defined by a set of indices of state variables to be flipped. For example, $N_1$ to $N_I$ are defined as $N_1 = \{j_1^{(1)}, j_2^{(1)}, ..., j_m^{(1)}\}$, $N_2 = \{j_1^{(2)}, j_2^{(2)}, ..., j_m^{(2)}\}$, ..., and $N_I = \{j_1^{(I)}, j_2^{(I)}, ..., j_m^{(I)}\}$. $j_i^{(i)}$ represents the i-th index amongst the indices of the m state variables included in $N_i$.

Note that different partial neighbors may contain the same indices, as illustrated in FIG. 1. That is, the ranges of indices included may overlap between different partial neighbors.

In the case where $N_1$ to $N_I$ are generated as described above, the first storing unit 11 stores therein groups of weight variables ($W_{ij}$'s) associated with the individual partial neighbors. For example, the $W_{ij}$ group of $N_1$ includes weight coefficients between, amongst the n state variables, each of the state variables included in $N_1$ and the rest of the state variables of $N_1$. The $W_{ij}$ group of $N_2$ includes weight coefficients between, amongst the n state variables, each of the state variables included in $N_2$ and the rest of the state variables of $N_2$. The $W_{ij}$ group of $N_I$ includes weight coefficients between, amongst the n state variables, each of the state variables included in $N_T$ and the rest of the state variables of $N_I$.

Note that the first storing unit 11 may also store various programs, such as a program that causes the data processor 10 to search for solutions to combinatorial optimization problems, and various data.

The second storing unit 12 stores therein, amongst the multiple weight coefficients included in the evaluation function, a weight coefficient group associated with a partial neighbor selected from the multiple partial neighbors. The second storing unit 12 is, for example, a storage device that is faster but has a smaller capacity than the above-described first storing unit 11. Examples of such a storage device include a volatile electronic circuit, such as a static random-access memory (SRAM). The second storing unit 12 may include an electronic circuit, such as a register.

The searching unit 13 performs a solution search for each partial neighbor (corresponding to the above-described sub-problem). The searching unit 13 reads the weight coefficient group stored in the second storing unit 12. The searching unit 13 then uses the read weight coefficient group to calculate a change ($\Delta E_i$) in the value of the evaluation function, made by changing the value of each state variable of the selected partial neighbor. $\Delta E_i$ is given, for example, by equation (2). The value of each state variable, the local field, the energy, and the like included in equation (2) are stored in a storing unit (e.g., a storage circuit, such as a register) (not illustrated) provided in the searching unit 13. The searching unit 13 is able to calculate in parallel $\Delta E_i$'s for the individual state variables of the selected partial neighbor. The searching unit 13 changes the value of one state variable of the partial neighbor, based on $\Delta E_i$'s for the individual state variables and a temperature value.

The searching unit 13 performs a solution search by Rejection-Free. In Rejection-Free, one of the state variables included in the partial neighbor is selected based on the probability given by the following equation (4), which uses the acceptance probability $A_i$ defined by equation (3), and the value of the selected state variable is changed.

$$P_i = \frac{A_i}{\sum_{i=1}^m A_i} \qquad (4)$$

In equation (4), m is the number of state variables included in the selected state variable group.

The selection based on the probability given by equation (4) is equivalent to selecting the state variable with an index of j defined by the following equation (5).

$$j = \mathrm{argmin}_i[\max(0, \Delta E_i) + T\ln(-\ln(r_i))] \qquad (5)$$

$\mathrm{argmin}_i$ indicates i with the minimum argument.

When the value of a state variable is changed, the searching unit 13 updates the local field and energy stored in a register or the like. The searching unit 13 searches for a solution to a combinatorial optimization problem by repeating, for each partial neighbor selected by the processing unit 14, an update process (including updates of the local field and energy) that includes the process of calculating $\Delta E_i$ and the process of changing the value of a state variable.

The searching unit 13 described above may be implemented using an electronic circuit, such as an application specific integrated circuit (ASIC) or field programmable gate array (FPGA). Alternatively, the searching unit 13 may be implemented through software processing in which a program is executed by a hardware processor, such as a central processing unit (CPU), graphics processing unit (GPU), or digital signal processor (DSP).

Based on $\Delta E_i$ for each state variable of the selected state variable group and a temperature value, the processing unit 14 calculates multiplicity, which is the number of iterations in which a state remains in the same state using a usual MCMC method instead of Rejection-Free.

A time series of states obtained when performing the solution search using the usual MCMC method is expressed, for example, as $\{X_n\}$ = {a, b, b, b, a, a, c, c, c, c, d, d, ...}. Hereinafter, the time series of states obtained in the solution search using the usual MCMC method is referred to as original chain.

Because state transitions may be rejected in the usual MCMC method, the same state is sometimes maintained over multiple consecutive iterations. In the case of the original chain $\{X_n\}$ above, following state a, state b is maintained for three iterations, state a is maintained for two iterations, state c is maintained for four iterations, and state d is maintained for two iterations. Such a multiplicity time series of $\{X_n\}$ is expressed as $\{M_k\}$ = {1, 3, 2, 4, 2, ...}.

On the other hand, Rejection-Free does not repeat the same state. Therefore, in the case where the state time series $\{X_n\}$ above is obtained by the usual MCMC method, Rejection-Free produces a state time series of $\{J_k\}$ = {a, b, a, c, d, ...}.

From the above, the multiplicity may also be said to be the number of samples of the original chain per sample obtained in the solution search by Rejection-Free.

The processing unit 14 calculates the multiplicity (M) based on the following equation (6).

$$ M = 1 + \lfloor \ln r / \ln(1 - P_e) \rfloor \qquad (6) $$

In equation (6), square brackets represent a floor function. r is a uniform random number value between 0 and 1. $P_e$ represents the probability of the state changing in one iteration and is called escape probability. The multiplicity M is a random variable following the geometric distribution of $P_e$, and a random number following the distribution is generated by equation (6). $P_e$ is given by the following equation (7).

$$ P_e = \frac{1}{m} \sum_{i=1}^{m} A_i \qquad (7) $$

$A_i$ in equation (7) is given by equation (3) above.

When the cumulated value of the multiplicity exceeds a predetermined threshold, the processing unit 14 causes the searching unit 13 to perform an update process using the weight coefficient group associated with a different partial neighbor selected from the multiple partial neighbors. For example, when the cumulated value of the multiplicity exceeds the predetermined threshold, the processing unit 14 selects an unselected partial neighbor from the multiple partial neighbors, then reads the values of a weight coefficient group associated with the partial neighbor from the first storing unit 11, and stores (writes) the read values of the weight coefficient group in the second storing unit 12. For example, the processing unit 14 overwrites the original weight coefficient group values with the values of the weight coefficient group associated with the newly selected partial neighbor.

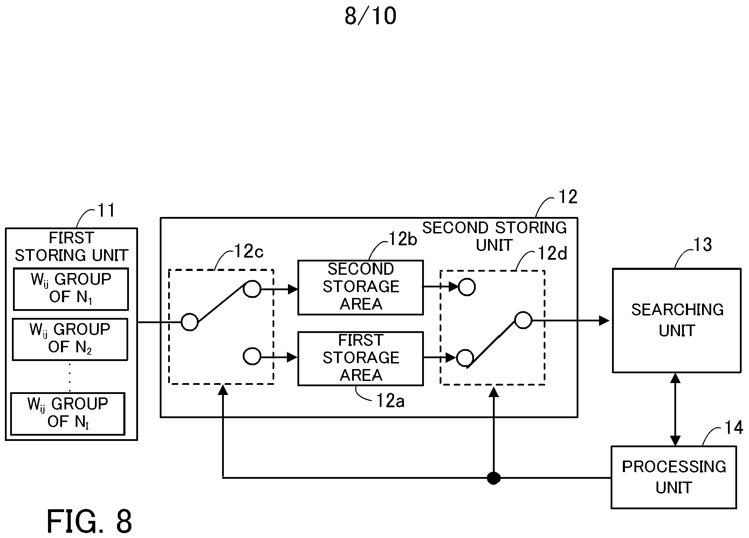

Note that, while the searching unit 13 is performing the update process using the values of the weight coefficient group associated with one partial neighbor, the processing unit 14 may select another partial neighbor in advance and store, in the second storing unit 12, the values of the weight coefficient group associated with the selected partial neighbor (see FIG. 8 described later).

Thus, the processing unit 14 has the function of a controller that controls each unit of the data processor 10.

The processing unit 14 may be implemented using an electronic circuit, such as an ASIC or FPGA. Alternatively, the processing unit 14 may be implemented through software processing in which a program is executed by a hardware processor, such as a CPU, GPU, or DSP.

FIG. 1 depicts an example of a solution search by the data processor 10, described above.

First, the searching unit 13 performs a solution search within the range of $N_1$ by Rejection-Free. In the example of FIG. 1, state transitions start from state $X_0$ and then take place in the order of states $X_1$, $X_2$, ..., and $X_1$.

In the solution search by Rejection-Free, such a state transition occurs per iteration; however, in a solution search according to the normal MCMC method described above, the same state may be repeated due to rejections. In the example of FIG. 1, state $X_0$ is repeated for three iterations, state $X_1$ is repeated for six iterations, and state $X_2$ is repeated for three iterations. That is, the multiplicity ($M_2^{(1)}$) of state $X_0$ is 3, the multiplicity ($M_2^{(1)}$) of state $X_1$ is 6, and the multiplicity ($M_3^{(1)}$) of state $X_2$ is 3.

The processing unit 14 calculates the multiplicity based on the above equation (6), and also determines whether the cumulated value exceeds a predetermined threshold. In the example of FIG. 1, when the multiplicity of state $X_l$ has reached 3, the cumulated value exceeds the threshold ($L_0$). Therefore, the processing unit 14 selects a different partial neighbor ($N_2$ in the example of FIG. 1), then reads the values of a weight coefficient group associated with the partial neighbor (the values of $W_{ij}$ group of $N_2$) from the first storing unit 11 and stores them in the second storing unit 12.

The solution search within the range of $N_2$ using Rejection-Free starts from state $X_l$. The processing unit 14 again repeats the calculation of the multiplicity and the determination of whether the cumulated value exceeds the threshold. In the example of FIG. 1, the multiplicity of $X_l$ within the range of $N_2$ is denoted by $M_1^{(2)}$.

As described above, in the solution search of each partial neighbor, when the cumulated value of the multiplicity exceeds the threshold, the process moves onto the solution search for the next partial neighbor. This prevents bias from being introduced into the solution search range for each partial neighbor, which in turn enables an efficient search for a solution to the combinatorial optimization problem.

Note that the data processor 10 may function as a sampling device.

In the usual MCMC method, the probability distribution indicating the probability of occupancy of each state in an equilibrium state is a target distribution (e.g., a Boltzmann distribution). Therefore, by outputting, as samples, states obtained in the process of repeating state transitions or values based on the obtained states, samples following the target distribution are acquired. The acquired samples are used, for example, to calculate an expected value in machine learning or the like.

In the data processor 10, the searching unit 13 outputs the values of multiple state variables for each update process (i.e., for each iteration of Rejection-Free), for example, as a sample. In addition, the processing unit 14 outputs the multiplicity M for the values of the multiple state variables (i.e., for each state). The target distribution is obtained by weighting the sample according to the multiplicity M. Even when the data processor 10 is made to function as a sampling device, it is possible to suppress bias in the search ranges, thus enabling accurate sampling.

Next described is a processing flow example of a data processing method performed by the data processor 10, with reference to a flowchart.

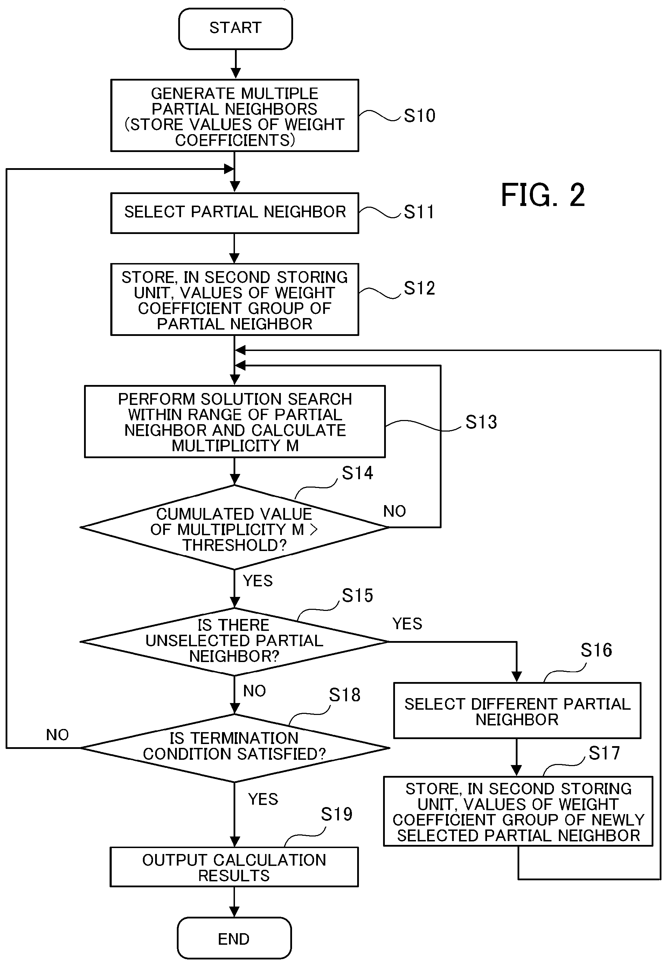

FIG. 2 is a flowchart illustrating a general flow of the data processing method.

First, based on problem information of a combinatorial optimization problem in question, partial neighbors are generated by the method described above (step S10). The multiple partial neighbors may be generated by the processing unit 14 or a device external to the data processor 10. In addition, in step S10, the values of multiple weight coefficients included in a corresponding evaluation function are stored in the first storing unit 11.

Next, the processing unit 14 selects a partial neighbor to be a solution search target (step S11), and stores the values of a weight coefficient group associated with the selected partial neighbor in the second storing unit 12 (step S12).

The searching unit 13 performs a solution search within the range of the partial neighbor, using the values of the weight coefficient group stored in the second storing unit 12 (step S13). Further, in step S13, the processing unit 14 calculates the multiplicity M.

The processing unit 14 determines whether the cumulated value of the multiplicity M exceeds a predetermined threshold ($L_0$ in the above example) (step S14). If determining that the cumulated value does not exceed the threshold, the processing unit 14 returns to step S13.

If determining that the cumulated value exceeds the threshold, the processing unit 14 determines whether there is a partial neighbor yet to be selected (step S15). If determining that there is an unselected partial neighbor, the processing unit 14 moves to step S16. If not, the processing unit 14 moves to step S18.

In step S16, the processing unit 14 selects a partial neighbor yet to be selected. Then, the processing unit 14 stores, in the second storing unit 12, the values of a weight coefficient group associated with the newly selected partial neighbor (step S17). Subsequently, the processing unit 14 repeats the process starting from step S13.

In step S18, the processing unit 14 determines whether a condition for terminating the solution search is satisfied. The condition for terminating the solution search may be, for example, whether the number of iterations has reached a predetermined number. In the case of using simulated annealing, the termination condition is, for example, whether the temperature value has reached a final temperature value. If determining that the termination condition is not satisfied, the processing unit 14 repeats the process starting from step 511.

For example, the partial neighbor $N_1$ depicted in FIG. 1 is selected, and a solution search is repeated. Note that the processing unit 14 may repeat the process starting from step S10 instead when determining that the termination condition is not satisfied. In this case, the processing unit 14 may generate multiple partial neighbors using a method different from the previous one.

When determining that the termination condition is satisfied, the processing unit 14 outputs calculation results (step S19) and terminates the processing. The calculation results are, for example, a state (the values of $x_1$ to $x_n$) with

the lowest energy obtained, amongst energies obtained in the update processes.

Next described are further specific procedures for a partial neighbor solution search and sampling.

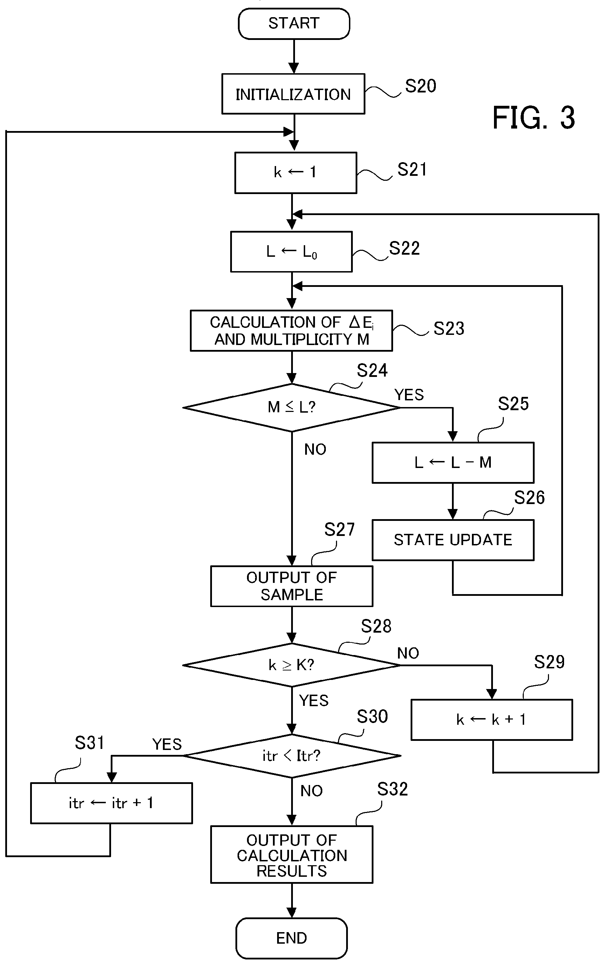

FIG. 3 is a flowchart illustrating an example of procedures for a partial neighbor solution search and sampling.

In the case where simulated annealing is used, the following processing is performed, for example, while gradually decreasing a temperature value T from a start value to an end value according to a predetermined temperature change schedule. For example, the temperature value T is reduced by multiplying the temperature value T by a value smaller than 1 for each fixed number of iterations. In the case where the inverse temperature $\beta$ is used as the temperature value T, the following processing is performed while gradually increasing the temperature value T.

In the case where replica exchange is performed, the searching unit 13 uses multiple replica circuits each having a different temperature value. Each replica circuit searches for a solution using the same partial neighbor. Then, the following processing is performed in each of the replica circuits. The processing unit 14 exchanges replicas each time a predetermined number of iterations is repeated. For example, the processing unit 14 randomly selects a pair of replica circuits with adjacent temperature values amongst the multiple replica circuits, and exchanges the temperature values or states between the two selected replica circuits, with an exchange probability based on their energy or temperature difference.

As illustrated in FIG. 3, the processing unit 14 first performs an initialization process (step S20). The initialization process includes setting of the following items: initial values of the energy and local field; the aforementioned threshold ($L_0$); the total number of partial neighbors (K in the example below); a condition for terminating the solution search (an upper limit Itr of the number of iterations in the example below). When the simulated annealing method is performed, the followings are also set: the start value and the end value of T (or $\beta$); and the value by which T (or $\beta$) is multiplied for each predetermined temperature change cycle. When the replica exchange method is performed, a temperature value for each replica circuit is set.

Then, the processing unit 14 assigns 1 to k, which is the index of a partial neighbor (step S21). This corresponds to selecting a partial neighbor with k = 1.

Next, the processing unit 14 assigns the above threshold value $L_0$ to a variable L (step S22). Subsequently, the searching unit 13 calculates $\Delta E_i$ for the partial neighbor with k = 1, and the processing unit 14 calculates the multiplicity M (step S23). In step S23, the searching unit 13 may select a state variable whose value is to be changed by the aforementioned Rejection-Free, but does not change the value (i.e., does not update the state) yet.

The processing unit 14 determines whether M $\leq$ L (step S24). The process of step S24 corresponds to that of step S14 of determining whether the cumulated value of the multiplicity M exceeds the threshold, depicted in FIG. 2. If determining that M $\leq$ L, the processing unit 14 moves to step S25. If not, the processing unit 14 moves to step S27.

In step S25, the processing unit 14 assigns L - M to L. Then, the processing unit 14 causes the searching unit 13 to update the state based on $\Delta E_i$ calculated in step S23 and the temperature value (step S26). The state update is done by changing the value of one state variable of the partial neighbor, selected by the aforementioned Rejection-Free. With the state update, the local field and energy are also updated. In addition, when the updated energy is the lowest ever, the searching unit 13 may hold the value of the lowest energy and the state with the lowest energy.

Note that, in step S26, the processing unit 14 outputs (or stores in a storing unit not illustrated) the state before the update and the multiplicity M calculated for the state before the update.

After step S26, the processing unit 14 repeats the process starting from step S23.

In step S27, the processing unit 14 outputs (or stores in a storing unit not illustrated) a sample (here, including the current state and L as the multiplicity of the state). No state update takes place in step S27.

After step S27, the processing unit 14 determines whether k $\geq$ K (step S28). If determining that k $\geq$ K, the processing unit 14 moves to step S30. If not, the processing unit 14 moves to step S29.

In step S29, the processing unit 14 assigns k + 1 to k so as to switch the solution search target to the next partial neighbor. Subsequently, the processing unit 14 repeats the process starting from step S22.

In step S30, the processing unit 14 determines whether itr < Itr, where itr is a variable representing the number of iterations and has an initial value of 1. If determining that itr < Itr, the processing unit 14 moves to step S31. If not, the processing unit 14 moves to step S32.

In step S31, the processing unit 14 assigns itr + 1 to itr. Subsequently, the processing unit 14 repeats the process starting from step S21. The process of step S32 is the same as that of step S19 of FIG. 2.

Note that the processing order illustrated in FIGS. 2 and 3 is merely an example, and the order may be changed as appropriate.

Even when the solution search is performed for each partial neighbor by Rejection-Free, the above-described processing allows for suppressing bias in the solution search range among partial neighbors, thus enabling accurate sampling.

(Example of circuit for selecting state variable whose value is to be changed by Rejection-Free)

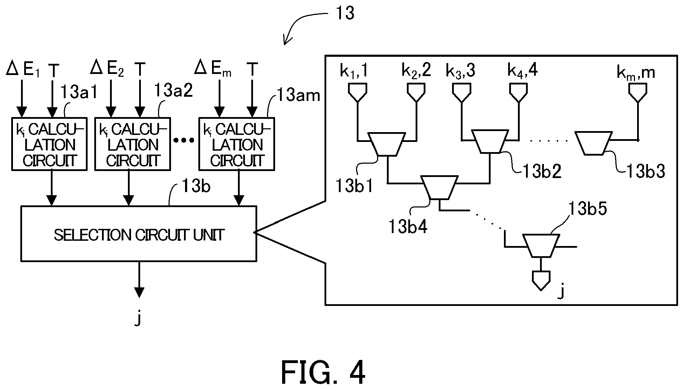

FIG. 4 illustrates a circuit example for selecting a state variable whose value is to be changed by Rejection-Free.

The searching unit 13 includes $k_i$ calculation circuits 13a1, 13a2, ..., and 13am and a selection circuit unit 13b used to select a state variable whose value is to be changed by Rejection-Free.

The $k_i$ calculation circuits 13a1 to 13am calculate max (0, $\Delta E_i$) + Tln(-ln($r_i$)) in the above equation (5) as $k_i$. Then, the $k_i$ calculation circuits 13a1 to 13am output $k_i$'s and their indices (i). For example, the $k_i$ calculation circuit 13a1 outputs $k_1$ and i = 1. The $k_i$ calculation circuit 13a2 outputs $k_2$ and i = 2. The $k_i$ calculation circuit 13am outputs $k_m$ and i = m.

The selection circuit unit 13b includes multiple selection circuits (selection circuits 13b1, 13b2, 13b3, 13b4, 13b5 and so on) arranged over multiple levels in a tree like structure.

Each of the multiple selection circuits outputs the smaller of the two $k_i$'s and its index. When the values of the two $k_i$'s are equal, $k_i$ with the smaller index and the index are output. The index (j) output from the selection circuit 13b5 at the lowest level is j of equation (5), which is the index of a state variable whose value is to be changed.

(Update of energy)

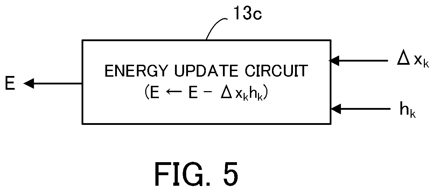

FIG. 5 illustrates an update of energy.

The searching unit 13 includes an energy update circuit 13c depicted in FIG. 5. When a value of $x_k$ is changed, the energy update circuit 13c updates the energy based on the change $\Delta x_k$ and $h_k$, which is the local field of $x_k$. Specifically, the energy E is updated by subtracting $\Delta x_k h_k$ from the original energy E.

(Configuration example of processing unit 14)

Next described is a configuration example of the processing unit 14 that calculates the multiplicity M.

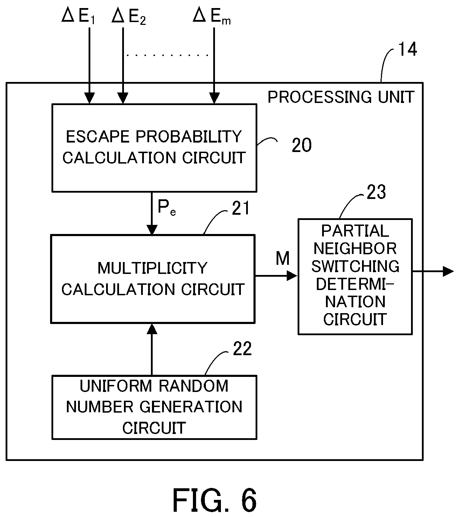

FIG. 6 illustrates an example of a processing unit.

The processing unit 14 includes an escape probability calculation circuit 20, a multiplicity calculation circuit 21, a uniform random number generation circuit 22, and a partial neighbor switching determination circuit 23.

The escape probability calculation circuit 20 receives $\Delta E_1$, $\Delta E_2$, ..., and $\Delta E_m$ output from the searching unit 13. Then, the escape probability calculation circuit 20 calculates the escape probability $P_e$ given by the above equation (7).

The multiplicity calculation circuit 21 calculates the multiplicity M given by the above equation (6) based on $P_e$ calculated by the escape probability calculation circuit 20 and a uniform random number r.

The uniform random number generation circuit 22 generates the uniform random number r between 0 and 1. The uniform random number generation circuit 22 is implemented using, for example, a Mersenne Twister, linear feedback shift register (LFSR), or the like.

The partial neighbor switching determination circuit 23 switches a partial neighbor on which the searching unit 13 performs a solution search when the cumulated value of the multiplicity M exceeds a threshold ($L_0$ in the example of FIG. 1).

$P_e$ is given by the above equation (7), as described above. Further, equation (7) may be expanded as the following equation (8).

$$P_e \quad = \frac{1}{m} \sum_{i=1}^{m} A_i = \frac{1}{m} \sum_{i=1}^{m} \exp(-\epsilon_i) \qquad (8)$$

$$= \frac{1}{m} \left[ \exp(-\epsilon_1) + \exp(-\epsilon_2) + \cdots \right]$$

$\epsilon_i$ in equation (8) is given by the following equation (9).

$$\epsilon_i = \max[0, \beta \Delta E_i] \qquad (9)$$

$P_e$ defined as equation (8) is calculated by the escape probability calculation circuit 20 described below.

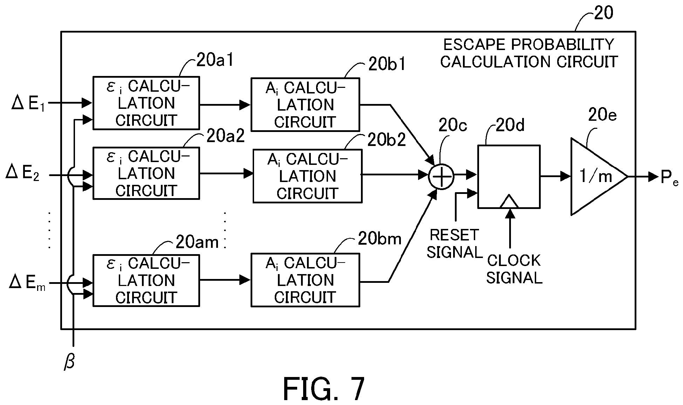

FIG. 7 illustrates an example of the escape probability calculation circuit.

The escape probability calculation circuit 20 includes $\epsilon_i$ calculation circuits 20a1, 20a2, ..., and 20am, $A_i$ calculation circuits 20b1, 20b2, ..., and 20bm, an addition circuit 20c, a register 20d, and a multiplication circuit 20e.

Each of the $\varepsilon_i$ calculation circuits 20a1 to 20am calculates $\varepsilon_i$ given by equation (9) based on $\Delta E_i$ and $\beta$ (inverse temperature) . For example, the $\varepsilon_i$ calculation circuit 20a1 calculates $\varepsilon_1$; the $\varepsilon_i$ calculation circuit 20a2 calculates $\varepsilon_2$; and the $\varepsilon_i$ calculation circuit 20am calculates $\varepsilon_m$.

Each of the $A_i$ calculation circuits 20b1 to 20bm calculates the acceptance probability $A_i$ (= exp(-$\varepsilon_i$)) of accepting a change in the value of a state variable that causes an energy change of $\Delta E_i$. For example, the $A_i$ calculation circuit 20b1 calculates exp(-$\varepsilon_1$); the $A_i$ calculation circuit 20b2 calculates exp(-$\varepsilon_2$); and the $A_i$ calculation circuit 20bm calculates exp(-$\varepsilon_m$).

The addition circuit 20c adds up exp(-$\varepsilon_1$) to exp(-$\varepsilon_m$).

The register 20d holds and outputs the addition results output from the addition circuit 20c in synchronization with a clock signal. The register 20d initializes the contents held therein to 0 upon receiving a reset signal.

The multiplication circuit 20e multiplies the value output from the register 20d by 1/m and outputs the resulting escape probability $P_e$.

Note that converting the calculation of the escape probability to, for example, a base-2 operation enables fast calculation. In order to perform such calculation, $\varepsilon_i$ is defined by equation (10) below.

$$\epsilon_i = \max \left[ 0, \frac{\beta}{\ln 2} \Delta E_i \right] \qquad (10)$$

$\varepsilon_i$ given by equation (10) is a value obtained by multiplying $\varepsilon_i$ of equation (9) by 1/ln2 = 1.433. When using $\varepsilon_i$ of equation (10), the escape probability $P_e$ is given by equation (11) below.

$$P_e = \frac{1}{m} \left[ 2^{-\epsilon_1} + 2^{-\epsilon_2} + \cdots \right] \qquad (11)$$

Assuming that the escape probability $P_e$ is calculated in the aforementioned operation, each of the $\varepsilon_i$ calculation circuits 20a1 to 20am calculates $\varepsilon_i$ given by equation (10) based on $\Delta E_i$ and $\beta$ (inverse temperature) . Then, each of the $A_i$ calculation circuits 20b1 to 20bm calculates the value of 2 to the power of -$\varepsilon_i$. The calculation of $2^{-\varepsilon_i}$ may be performed by a shift operation using a shift register. This allows for faster operation compared to the case of calculating exp(-$\varepsilon_i$).

Note that the quantization error is sufficiently small if a decimal representation with about two decimal places is used as $\varepsilon_i$.

The processing unit 14 may find an approximate value for the multiplicity M. For example, when a value is changed, the multiplicity M may be approximately obtained from the number of state variables satisfying -log($r_i$) > $\beta \Delta E_i$ (see, for example, Japanese Laid-open Patent Publication No. 2020-135727).

(Partial neighbor switching method)

FIG. 8 illustrates an example of how to switch a partial neighbor.

In the example of FIG. 8, the second storing unit 12 includes a first storage area 12a, a second storage area 12b, and switches 12c and 12d.

The first storage area 12a is provided for storing a $W_{ij}$ group associated with a partial neighbor with, for example, an odd index. The second storage area 12b is provided for storing a $W_{ij}$ group associated with a partial neighbor with, for example, an even index. That is, in the example of FIG. 8, the second storing unit 12 is able to store $W_{ij}$ groups associated with two partial neighbors at once.

Based on a switch control signal supplied from the processing unit 14, the switch 12c switches storage space for each $W_{ij}$ group read from the first storing unit 11 between the first storage area 12a and the second storage area 12b.

Based on a switch control signal supplied from the processing unit 14, the switch 12d switches the $W_{ij}$ group to be supplied to the searching unit 13 between one stored in the first storage area 12a and one stored in the second storage area 12b.

When causing the searching unit 13 to perform an update process using the $W_{ij}$ group stored in the first storage area 12a, the processing unit 14 connects the first storage area 12a and the searching unit 13 with the switch 12d. While the update process using the $W_{ij}$ group stored in the first storage area 12a is being performed, the processing unit 14 connects the first storing unit 11 and the second storage area 12b with the switch 12c. Then, the processing unit 14 reads, from the first storing unit 11, the $W_{ij}$ group associated with the partial neighbor for which the solution search is performed next, and writes the read $W_{ij}$ group in the second storage area 12b.

When the solution search using the $W_{ij}$ group stored in the first storage area 12a is completed, the processing unit 14 flips the switch 12d and then causes the searching unit 13 to perform an update process using the $W_{ij}$ group stored in the second storage area 12b.

According to the aforementioned configuration, it is possible to shorten the time needed to read a $W_{ij}$ group in switching a partial neighbor for the solution search, thus making the solution search more efficient.

(Application of continuous variables)

In the above description, the state variables are binary variables each taking a value of 0 or 1. However, the state variables may be continuous variables instead.

In the case of using binary variables, a state transition is generated by flipping the value of a binary variable (adding $\Delta x_i = 1 - 2x_i$ to the original $x_i$). On the other hand, in the case of using continuous variables, a state transition is generated by adding or subtracting a continuous random variable $\Delta x_i$ to or from the original $x_i$. Whether to add or subtract is randomly selected with a probability of 50%.

In the solution search for a partial neighbor, the searching unit 13 generates the random variable $\Delta x_i$ that follows a probability distribution (for example, a normal distribution with an average value of 0) for each real-number state variable included in the partial neighbor.

Partial neighbors are generated in the same manner as in the case of using binary variables. Note however that, in the solution search, each time a partial neighbor subject to the solution search is changed, the searching unit 13 again generates the random variable $\Delta x_i$ for the new partial neighbor.

The evaluation function in the case of using continuous variables is given by the following equation (12).

$$E(x) = \frac{1}{2} \sum_{i \in V} \lambda_i x_i^2 - \sum_{i \in V} b_i x_i - \sum_{<i,j> \in E} W_{ij} x_i x_j \qquad (12)$$

$\lambda_i$ in equation (12) is a coefficient with a value greater than 0.

The amount of change in the energy E obtained when the value of the state variable $x_i$ has changed to $x_i + \delta_i \Delta x_i$ is given by equation (13) below.

$$\Delta E_i = -h_i \delta_i \Delta x_i \qquad (13)$$

Here, $\delta_i$ is a random number that is generated for each $x_i$ and takes a value of +1 or -1 with a probability of 50%. The value of $\Delta x_i$ is constant and does not change during the solution search for a partial neighbor. The local field ($h_i$) of equation (13) is given by equation (14) below.

$$h_i = \sum_{i=1}^{n} C_{ij} x_j + b_i - \frac{\lambda_i \delta_i \Delta x_i}{2} \qquad (14)$$

$C_{ij}$ of equation (14) is given by equation (15) below.

$$C_{ij} = \begin{cases} -\lambda_i & (i = j) \\ W_{ij} & (<i,j> \in E) \\ 0 & otherwise \end{cases} \qquad (15)$$

Note that, in equation (15), a set E is a set of coefficient indices with non-zero weight coefficients $w_{ij}$'s.

Equations (12) and (14) are used to calculate the initial values of the energy and the local field. When a change is made to the value of a state variable, the energy and local field are updated by difference calculation as in the case of using binary variables. In addition, when the state variable $x_j$ is selected and changed to $x_j + \delta_j \Delta x_j$, the value of $\Delta x_j$ is maintained and the value of $\delta_j$ is randomly generated again.

When the value of $x_j$ changes to $x_j + \delta_j \Delta x_j$, the energy E is updated by subtracting $\delta_j \Delta x_j h_j$ from the original energy E. The local field $h_i$ is updated by adding $C_{ij} \delta_j \Delta x_j$ to the original $h_i$. At this time, because the random number $\delta_j$ is generated again for the changed $x_j$, the value of $h_i$ is updated based on the difference generated by the change in the value of $\delta_j$. This update is done by subtracting $\lambda_j \varepsilon_j / 2$ from the original $h_i$. $\varepsilon_j$ is the amount of change in $\delta_j \Delta x_j$ and is given by equation (16) below.

$$\epsilon_j = \left( \delta_j - \delta_j^{(old)} \right) \Delta x_j \qquad (16)$$

In equation (16), $\delta_j^{(old)}$ is the value of $\delta_j$ just before changing the value of $x_j$, and $\delta_j$ is the newly generated value.

Note that, in the case of using continuous variables, the local field in response to switching of a partial neighbor subject to the solution search is updated by subtracting $\lambda_i \varepsilon_i / 2$ from the original $h_i$. $\varepsilon_i$ is the amount of change in the random variable $\delta_i \Delta x_i$ for the partial neighbor used and is given by equation (17) below.

$$\epsilon_i = \delta_i \Delta x_i - \left( \delta_i \Delta x_i \right)^{(old)} \qquad (17)$$

In equation (17), $(\delta_i \Delta x_i)^{(old)}$ is the value of $\delta_i \Delta x_i$ for $x_i$ in the state just before the switching of the partial neighbor.

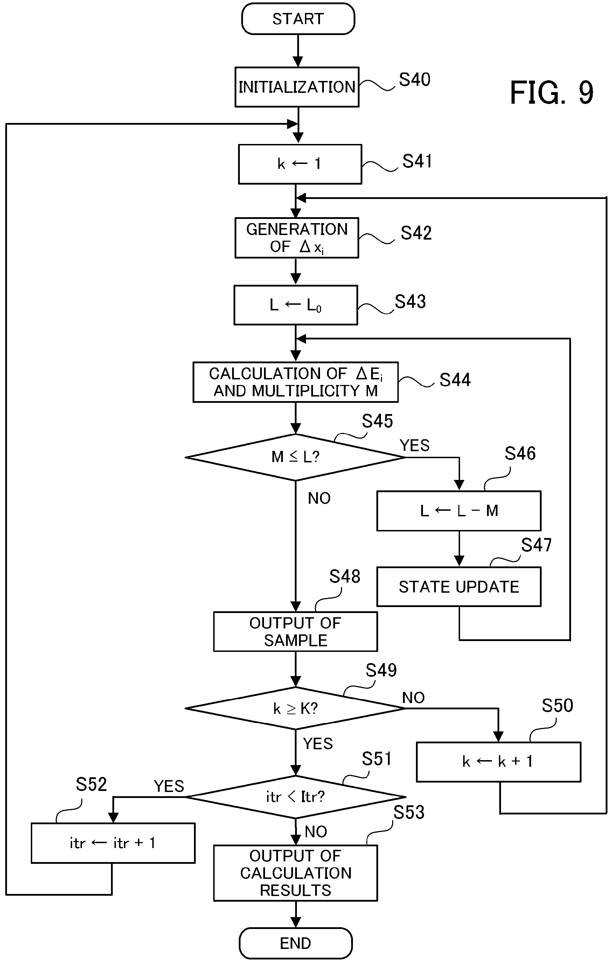

FIG. 9 is a flowchart illustrating an example of procedures for a partial neighbor solution search where continuous variables are used.

The procedures to be followed when using continuous variables are almost the same as in the case of using binary variables (FIG. 3). Steps S40 and S41 are the same as steps S20 and S21, respectively, of FIG. 3.

After step S41, in the case of using continuous variables, the searching unit 13 generates the random variable $\Delta x_i$ for each state variable included in the partial neighbor (step S42), as described above. Subsequent steps S43 to S53 are the same as steps S22 to S32 of FIG. 3.

Note however that, in order to switch the target of the solution search to the next partial neighbor, the process starting from step S42 is repeated after the process of assigning k + 1 to k (step S50). In addition, if the value of $x_j$ is changed to $x_j + \delta_j \Delta x_j$, as described above, in the state update of step S47, the energy E is updated by subtracting $\delta_j \Delta x_j h_j$ from the original energy E. The local field $h_i$ is updated by adding $C_{ij} \delta_j \Delta x_j$ to the original $h_i$.

As described above, the method of the present embodiment is also applicable to the case of using continuous variables for the state variables.

(Hardware example of data processor)

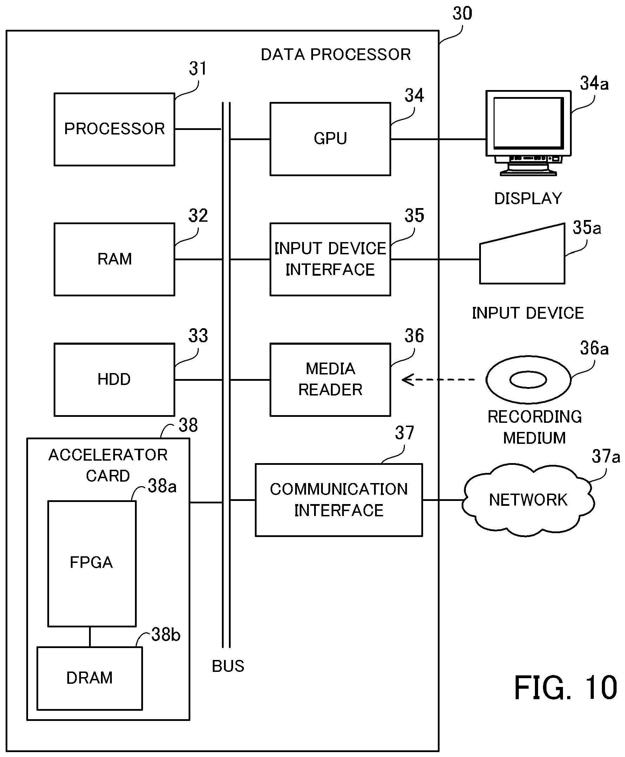

FIG. 10 illustrates a hardware example of a data processor.

The data processor 30 is, for example, a computer, and includes a processor 31, a RAM 32, an HDD 33, a GPU 34, an input device interface 35, a media reader 36, a communication interface 37, and an accelerator card 38. These units are connected to a bus.

The processor 31 functions, for example, as the processing unit 14 of FIG. 1. The processor 31 is, for example, a GPU or CPU which includes an arithmetic circuit for executing program instructions and a storage circuit, such as a cache memory. The processor 31 reads out at least part of programs and data stored in the HDD 33, loads them into the RAM 32, and executes the loaded programs. Note that the processor 31 may include two or more processor cores. In addition, the data processor 30 may include two or more processors. The term "processor" may be used to refer to a set of processors (multiprocessor).

The RAM 32 is volatile semiconductor memory for temporarily storing therein programs to be executed by the processor 31 and data to be used by the processor 31 for its computation. Note that the data processor 30 may be provided with a different type of memory other than the RAM 32, or may be provided with two or more memory devices.

The HDD 33 is a non-volatile storage device to store therein software programs, such as an operating system (OS), middleware, and application software, and various types of data. The programs include, for example, a program that causes the data processor 30 to execute a process of searching for a solution to a combinatorial optimization problem. Note that the data processor 30 may be provided with a different type of memory device, such as flash memory or a solid state drive (SSD), or may be provided with two or more non-volatile storage devices.

The GPU 34 produces video images (for example, images with the calculation results of a combinatorial optimization problem) in accordance with drawing commands from the processor 31 and displays them on a screen of a display 34a coupled to the data processor 30. The display 34a may be any type of display, such as a cathode ray tube (CRT) display; a liquid crystal display (LCD); a plasma display panel (PDP); or an organic electroluminescence (OEL) display.

The input device interface 35 receives an input signal from an input device 35a connected to the data processor 30 and supplies the input signal to the processor 31. Various types of input devices may be used as the input device 35a, for example, a pointing device, such as a mouse, a touch panel, a touch-pad, or a trackball; a keyboard; a remote controller; or a button switch. A plurality of types of input devices may be connected to the data processor 30.

The media reader 36 is a reader for reading programs and data recorded in a storage medium 36a. As the storage medium 36a, any of the following may be used: a magnetic disk, an optical disk, a magneto-optical disk (MO), and a semiconductor memory. Examples of the magnetic disk are a flexible disk (FD) and HDD. Examples of the optical disk are a compact disc (CD) and a digital versatile disc (DVD).

The media reader 36 copies programs and data read from the storage medium 36a to a different storage medium, for example, the RAM 32 or the HDD 33. The read programs are executed, for example, by the processor 31. Note that the storage medium 36a may be a portable storage medium, and may be used to distribute the programs and data. The storage medium 36a and the HDD 33 are sometimes referred to as computer-readable storage media.

The communication interface 37 is connected to a network 37a and communicates with different information processors via the network 37a. The communication interface 37 may be a wired communication interface connected via a cable to a communication device, such as a switch, or may be a wireless communication interface connected via a wireless link to a base station.

The accelerator card 38 is a hardware accelerator for searching for solutions to combinatorial optimization problems. The accelerator card 38 includes an FPGA 38a and a DRAM 38b.

The FPGA 38a implements, for example, the functions of the second storing unit 12 and the searching unit 13 of FIG. 1.

The DRAM 38b implements, for example, the function of the first storing unit 11 of FIG. 1.

Note that the FPGA 38a may implement the function of the processing unit 14 of FIG. 1. In addition, the accelerator card 38 may be provided in plurality.

The hardware configuration for realizing the data processor 10 of FIG. 1 is not limited to that depicted in FIG. 10. For example, the functions of the second storing unit 12, the searching unit 13, and the processing unit 14 may be implemented by a processor, such as a GPU having multiple cores, and memory provided within the processor.

The processes performed by the data processors 10 and 30 of the present embodiment (e.g., FIGS. 2, 3, and 9) may be implemented via software by causing the data processors 10 and 30 to execute a program.

Such a program may be recorded in a computer-readable storage medium. Examples of such a computer-readable storage medium include a magnetic disk, an optical disk, a magneto-optical disk, and semiconductor memory. Examples of the magnetic disk are a flexible disk (FD) and HDD. Examples of the optical disk are a compact disc (CD), CD-recordable (CD-R), CD-rewritable (CD-RW), digital versatile disc (DVD), DVD-R, and DVD-RW. The program may be recorded on portable storage media and then distributed. In such a case, the program may be executed after being copied from such a portable storage medium to a different storage medium.

Having described aspects of the data processor, program, and data processing method based on the embodiment above, they are merely examples and the particular details of these illustrative examples shall not be construed as limitations on the appended claims.

According to an aspect, it is possible to perform an efficient solution search.

**Claims**

1. A data processing apparatus comprising:

   first memory means (11) for storing values of a plurality of weight coefficients included in an evaluation function which is obtained by transforming a combinatorial optimization problem;
   second memory means (12) for storing, amongst the plurality of weight coefficients, values of a weight coefficient group which is associated with a state variable group selected from a plurality of state variable groups, the plurality of state variable groups being obtained by dividing a plurality of state variables included in the evaluation function;
   searching means (13) for searching for a solution to the combinatorial optimization problem by repeating an update process, the update process including a process of calculating, using the values of the weight coefficient group read from the second memory means, a change in a value of the evaluation function responsive to changing a value of each of state variables of the state variable group and a process of changing a value of one of the state variables of the state variable group based on the change and a temperature value; and

processing means (14) for calculating, based on the change and the temperature value, multiplicity indicating a number of iterations in which the values of the state variables of the state variable group are maintained in searching for the solution using a Markov chain Monte Carlo method, and causing, responsive to a cumulated value of the multiplicity exceeding a predetermined threshold, the searching means to perform the update process using the values of the weight coefficient group which is associated with a different state variable group selected from the plurality of state variable groups.

2. The data processing apparatus according to claim 1, wherein:

the searching means outputs values of the plurality of state variables for each of the update processes, and the processing means outputs the multiplicity for each state formed by the values of the plurality of state variables.

3. The data processing apparatus according to claim 1, wherein:

the processing means
calculates, for each of the state variables of the state variable group, an acceptance probability of accepting a value change based on the change and the temperature value,
calculates an escape probability by dividing a sum of the acceptance probability by a number of the state variables of the state variable group, and
calculates the multiplicity based on the escape probability and a random number value.

4. The data processing apparatus according to claim 3, wherein:
the processing means calculates the acceptance probability by shift operation.

5. The data processing apparatus according to claim 1, wherein:

the second memory means includes a first storage area (12a) and a second storage area (12b), and
while the searching means is performing the update process using the values of the weight coefficient group stored in the first storage area, the values of the weight coefficient group associated with the different state variable group are read from the first memory means and written to the second storage area.

6. A computer program that causes a computer to execute a process comprising:

storing, in first memory means (11), values of a plurality of weight coefficients included in an evaluation function which is obtained by transforming a combinatorial optimization problem;
storing, in second memory means (12), amongst the plurality of weight coefficients, values of a weight coefficient group which is associated with a state variable group selected from a plurality of state variable groups, the plurality of state variable groups being obtained by dividing a plurality of state variables included in the evaluation function;
searching for a solution to the combinatorial optimization problem by repeating an update process, the update process including a process of calculating, using the values of the weight coefficient group read from the second memory means, a change in a value of the evaluation function responsive to changing a value of each of state variables of the state variable group and a process of changing a value of one of the state variables of the state variable group based on the change and a temperature value;
calculating, based on the change and the temperature value, multiplicity indicating a number of iterations in which the values of the state variables of the state variable group are maintained in searching for the solution using a Markov chain Monte Carlo method; and
performing, responsive to a cumulated value of the multiplicity exceeding a predetermined threshold, the update process using the values of the weight coefficient group which is associated with a different state variable group selected from the plurality of state variable groups.

7. A data processing method comprising:

storing, by first memory means (11), values of a plurality of weight coefficients included in an evaluation function which is obtained by transforming a combinatorial optimization problem;
storing, by second memory means (12), amongst the plurality of weight coefficients, values of a weight coefficient group which is associated with a state variable group selected from a plurality of state variable groups, the plurality of state variable groups being obtained by dividing a plurality of state variables included in the evaluation function;

searching, by searching means (13), for a solution to the combinatorial optimization problem by repeating an update process, the update process including a process of calculating, using the values of the weight coefficient group read from the second memory means, a change in a value of the evaluation function responsive to changing a value of each of state variables of the state variable group and a process of changing a value of one of the state variables of the state variable group based on the change and a temperature value;

calculating, by processing means (14), based on the change and the temperature value, multiplicity indicating a number of iterations in which the values of the state variables of the state variable group are maintained in searching for the solution using a Markov chain Monte Carlo method, and causing, responsive to a cumulated value of the multiplicity exceeding a predetermined threshold, the searching means to perform the update process using the values of the weight coefficient group which is associated with a different state variable group selected from the plurality of state variable groups.

INDEX OF STATE VARIABLE

OVERLAP BETWEEN $N_1$ AND $N_2$

RF SOLUTION SEARCH WITHIN RANGE OF $N_1$

RF SOLUTION SEARCH WITHIN RANGE OF $N_2$

$M_1^{(1)}$

$M_3^{(1)}$

$M_{I+1}^{(1)}$

$M_2^{(1)}$

$M_1^{(2)}$

CUMULATED VALUE OF MULTIPLICITY M

RF: REJECTION-FREE

MULTIPLICITY M: NUMBER OF ITERATIONS WITH STATE MAINTAINED SAME IN USUAL MCMC

CUMULATED VALUE OF MULTIPLICITY $M > L_0$ ⟹ SOLUTION SEARCH WITHIN RANGE OF NEXT PARTIAL NEIGHBOR

DATA PROCESSOR 10

FIRST STORING UNIT 11
$W_{ij}$ GROUP OF $N_1$
$W_{ij}$ GROUP OF $N_2$
$W_{ij}$ GROUP OF $N_I$

SECOND STORING UNIT 12
$W_{ij}$ GROUP OF $N_1$

SEARCHING UNIT 13

PROCESSING UNIT 14

FIG. 1

FIG. 2

START

GENERATE MULTIPLE PARTIAL NEIGHBORS (STORE VALUES OF WEIGHT COEFFICIENTS) — S10

SELECT PARTIAL NEIGHBOR — S11

STORE, IN SECOND STORING UNIT, VALUES OF WEIGHT COEFFICIENT GROUP OF PARTIAL NEIGHBOR — S12

PERFORM SOLUTION SEARCH WITHIN RANGE OF PARTIAL NEIGHBOR AND CALCULATE MULTIPLICITY M — S13

S14 — CUMULATED VALUE OF MULTIPLICITY M > THRESHOLD? — NO / YES

S15 — IS THERE UNSELECTED PARTIAL NEIGHBOR? — YES / NO

S16 — SELECT DIFFERENT PARTIAL NEIGHBOR

S17 — STORE, IN SECOND STORING UNIT, VALUES OF WEIGHT COEFFICIENT GROUP OF NEWLY SELECTED PARTIAL NEIGHBOR

S18 — IS TERMINATION CONDITION SATISFIED? — NO / YES

S19 — OUTPUT CALCULATION RESULTS

END

# FIG. 3

START

INITIALIZATION — S20

$k \leftarrow 1$ — S21

$L \leftarrow L_0$ — S22

CALCULATION OF $\Delta E_i$ AND MULTIPLICITY M — S23

S24
$M \leq L?$

YES → S25 $L \leftarrow L - M$

NO

S26 STATE UPDATE

S27 OUTPUT OF SAMPLE

S28
$k \geq K?$

NO → S29 $k \leftarrow k + 1$

YES

S30
$itr < Itr?$

YES → S31 $itr \leftarrow itr + 1$

NO → S32 OUTPUT OF CALCULATION RESULTS

END

FIG. 4

13c

ENERGY UPDATE CIRCUIT
$(E \leftarrow E - \Delta x_k h_k)$

$E$

$\Delta x_k$

$h_k$

FIG. 5

$\Delta E_1$ $\Delta E_2$ $\Delta E_m$

· · · · · · · · · ·

PROCESSING UNIT ⌐14

ESCAPE PROBABILITY
CALCULATION CIRCUIT ⌐20

$P_e$ ⌐21

MULTIPLICITY
CALCULATION CIRCUIT

M

⌐23

PARTIAL
NEIGHBOR
SWITCHING
DETERMI-
NATION
CIRCUIT

⌐22

UNIFORM RANDOM
NUMBER GENERATION
CIRCUIT

# FIG. 6

FIG. 7

EP 4 345 696 A1

FIG. 8

**FIG. 9**

START

INITIALIZATION — S40

$k \leftarrow 1$ — S41

GENERATION OF $\Delta x_i$ — S42

$L \leftarrow L_0$ — S43

CALCULATION OF $\Delta E_i$ AND MULTIPLICITY M — S44

S45
$M \leq L$?

YES → S46
$L \leftarrow L - M$

S47
STATE UPDATE

NO

S48
OUTPUT OF SAMPLE

S49
$k \geq K$? — NO → S50 $k \leftarrow k + 1$

YES

S51
$itr < Itr$? — YES → S52 $itr \leftarrow itr + 1$

NO

S53
OUTPUT OF CALCULATION RESULTS

END

DATA PROCESSOR 30

PROCESSOR 31

GPU 34

DISPLAY 34a

RAM 32

INPUT DEVICE INTERFACE 35

INPUT DEVICE 35a

HDD 33

MEDIA READER 36

RECORDING MEDIUM 36a

ACCELERATOR CARD 38

FPGA 38a

DRAM 38b

COMMUNICATION INTERFACE 37

NETWORK 37a

BUS

FIG. 10

Europäisches
Patentamt

European
Patent Office

Office européen
des brevets

**EUROPEAN SEARCH REPORT**

Application Number

EP 23 19 4811

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/303754 A1 (KANDA KOUICHI [JP] ET AL) 30 September 2021 (2021-09-30) <br> * paragraph [0054]; claim 1; figures 1, 6 * <br> * paragraph [0033] * <br> * paragraph [0096] – paragraph [0097] * <br> * paragraph [0004] * <br> ----- | 1-7 | INV. <br> G06N5/01 <br> G06F17/11 <br> G06N7/01 |
| A,D | SIGENG CHEN ET AL: "Optimization via Rejection-Free Partial Neighbor Search", ARXIV.ORG, CORNELL UNIVERSITY LIBRARY, 201 OLIN LIBRARY CORNELL UNIVERSITY ITHACA, NY 14853, <br> 15 April 2022 (2022-04-15), XP091211440, <br> * page 5, line 1 – line 2 * <br> * section 1.3; <br> page 4, paragraph 1 * <br> * Algorithm 2; <br> line 5 – line 7 * <br> * page 6, line 1 – line 2 * <br> * Algorithm 3; <br> line 11 – line 12 * <br> * section 2; <br> page 6, paragraph 4 * <br> ----- | 1-7 | |
| A,D | ROSENTHAL JEFFREY S ET AL: "Jump Markov chains and rejection-free Metropolis algorithms", <br> COMPUTATIONAL STATISTICS, PHYSICA VERLAG, DE, <br> vol. 36, no. 4, 13 March 2021 (2021-03-13) <br> , pages 2789-2811, XP037622638, <br> ISSN: 0943-4062, DOI: <br> 10.1007/S00180-021-01095-2 <br> [retrieved on 2021-03-13] <br> * page 6, paragraph 2 * <br> ----- <br> -/-- | 1-7 | TECHNICAL FIELDS SEARCHED (IPC) <br><br> G06N <br> G06F |

The present search report has been drawn up for all claims

| Place of search | Date of completion of the search | Examiner |
|---|---|---|
| The Hague | 7 February 2024 | Tidriri, Khaoula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

**EP 23 19 4811**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/319154 A1 (DOTE AKI [JP] ET AL) 14 October 2021 (2021-10-14) * claim 1 * ----- | 1-7 | |
| | | | TECHNICAL FIELDS SEARCHED (IPC) |

The present search report has been drawn up for all claims

| Place of search | Date of completion of the search | Examiner |
|---|---|---|
| **The Hague** | **7 February 2024** | **Tidriri, Khaoula** |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 4811

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2024

| Patent document cited in search report | | Publication date | Patent family member(s) | | Publication date |
|---|---|---|---|---|---|
| US 2021303754 | A1 | 30-09-2021 | CN | 113448378 A | 28-09-2021 |
| | | | EP | 3886002 A1 | 29-09-2021 |
| | | | JP | 7410394 B2 | 10-01-2024 |
| | | | JP | 2021157360 A | 07-10-2021 |
| | | | US | 2021303754 A1 | 30-09-2021 |
| US 2021319154 | A1 | 14-10-2021 | CN | 113536229 A | 22-10-2021 |
| | | | EP | 3896622 A1 | 20-10-2021 |
| | | | JP | 2021168096 A | 21-10-2021 |
| | | | US | 2021319154 A1 | 14-10-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020135727 A

**Non-patent literature cited in the description**

- **J. S. ROSENTHAL et al.** ump Markov Chains and Rejection-Free Metropolis Algorithms. *Computational Statistics,* 2021, vol. 36 (4), 2789-2811

- **SIGENG CHEN et al.** Optimization via Rejection-Free Partial Neighbor Search. *arXiv:2205.02083,* 15 April 2022